# EUROPÄISCHE PATENTSCHRIFT

(11) **EP 1 250 541 B1**
(45) Veröffentlichungstag und Bekanntmachung des Hinweises auf die Patenterteilung: **27.08.2003**
(21) Anmeldenummer: 01913512.8
(22) Anmeldetag: 18.01.2001
(51) Int. Cl.: F16G 13/16

(54) **ENERGIEFÜHRUNGSKETTE**
ENERGY DRAG CHAIN
CHAINE D'ACHEMINEMENT D'ENERGIE

(30) Priorität: 27.01.2000 DE 20001505 U
(43) Veröffentlichungstag der Anmeldung: 23.10.2002
(73) Patentinhaber: IGUS SPRITZGUSSTEILE FÜR DIE INDUSTRIE GmbH, D-51147 Köln (DE)
(72) Erfinder: BLASE, Günter, 51429 Bergisch Gladbach (DE)
(74) Vertreter: Stachow, E.-W., Prof. Dr.
(86) Internationale Anmeldenummer: DE0100202
(87) Internationale Veröffentlichungsnummer: WO01055618

(56) Entgegenhaltungen:
- EP-A- 0 456 537
- DE-A- 19 647 322
- DE-U- 20 001 505
- US-A- 5 020 313

## Beschreibung

Die Erfindung betrifft eine Energieführungskette zur Führung von Schläuchen, Kabeln oder dergleichen zwischen zwei relativ zueinander beweglichen Anschlussstellen mit mehreren gelenkig miteinander verbundenen Kettengliedern, die jeweils zwei Seitenlaschen und diese miteinander verbindende Traversen aufweisen.

Bei horizontaler Anwendung einer derartigen Energieführungskette ist in der Regel ein Kettenende an einer Stationären Anschlussstelle und das andere Kettenende an einer horizontal beweglichen Anschlussetelle des Energieverbrauchers befestigt. An die stationäre Anschlussstelle schließt sich ein gerader Kettenabschnitt an, der Untertrum genannt wird und auf einer Ablagefläche der stationären Basis oder im Innern einer Führungsrinne abgelegt wird. Das untertrum geht über einen Umlenkbereich der Kette in ein freitragendes oder auf dem Untertrum bzw. auf Gleitschienen der Führungsrinne zumindest teilweise gleitendes Obertrum über. Das Obertrum ist mit der Anschlussstelle des beweglichen Energieverbrauchers verbunden.

Wird die Energieführungskette durch den beweglichen Energieverbraucher im Schubbetrieb verfahren, so schwenken Kettenglieder aus dem Umlenkbereich bzw. Obertrum in die Strecklage des Untertrums und schlagen dabei flächig auf der Ablage bzw. in der Führungsrinne auf.

Um die dabei auftretenden Geräusche zu dämpfen, wurden lärmdämpfende Moorgummistreifen auf der Ablagefläche bzw. in der Führungsrinne angeordnet. Es hat sich jedoch herausgestellt, dass derartige Dämpfungsmittel mit der Zeit ermüden und insbesondere bei Energieführungsketten mit hohen verfahrgeschwindigkeiten einem starken Verschleiß unterliegen und dass sich Gummiteile lösen, die zu einer Verschmutzung der Ablage bzw. Führungsrinne führen können. Ebenfalls ist nachteilig, dass die Moorgummistreifen bei der Installation der Energieführungskette angebracht werden müssen. Eine nicht sachgerechte Anbringung kann leicht die lärmvermindernde Funktion der Gummistreifen und das Fahrverhalten der Energieführungskette beeinträchtigen. Die Gummistreifen können nicht fertig mit einem vorkonfektionierten System geliefert werden.

Eine Energieführungskette der eingangs genannten Art ist aus der EP 0 456 537 bekannt. Bei den in diesem Dokument offenbarten Kettengliedern sind an der im Umlenkbereich innenliegenden Seite Gleitkufen vorgesehen. Die Gleitkufen dienen zum Gleiten des Obertrums der Energieführungskette auf dem Untertrum oder einer in einer Führungsrinne angeordneten Gleitschiene und somit zur Verschleißminderung der betreffenden Teile der Kette.

Energieführungsketten mit an der im Umlenkbereich innenliegenden Seite angeordneten Gleitkufen sind auch aus der DE 196 47 322 und der US 5 020 313 bekannt. Die Gleitkufen dienen bei diesen Ketten dazu, um Verschleiß und Geräusche der aufeinanderreibenden Kettenglieder zu vermeiden.

Der vorliegenden Erfindung liegt die Aufgabe zugrunde, Dämpfungsmaßnahmen für die Ablage des Untertrums einer Energieführungskette zu schaffen, mit denen die Nachteile des Standes der Technik vermieden werden, insbesondere nicht zur Verschmutzung der Ablage oder Führungsrinne führen, sicher installiert und fertig mit einem vorkonfektionierten System geliefert werden können.

Eine erste erfindungsgemäße Lösung der Aufgabe besteht darin, dass bei einer Ausführung der Energieführungskette der eingangs genannten Art zumindest in einem Kettenabschnitt die Kettenglieder Dämpfungsmittel aus weichem Material aufweisen, welche Dämpfungsmittel an der im Umlenkbereich außenliegenden Seite angeordnet sind und an dieser Seite von den Kettengliedern vorstehen, wobei die Dämpfungsmittel als Pilzkopfstopfen ausgebildet sind und einen Fuß aufweisen, der in eine entsprechende Nut an der jeweiligen Stelle des Kettenglieds eingreift.

Eine zweite erfindungegemäße Lösung der Aufgabe besteht darin, dass bei einer Energieführungskette der eingangs genannten Art zumindest in einem Kettenabschnitt die Kettenglieder Dämpfungsmittel aus weichem Material aufweisen, welche Dämpfungsmittel an der im Umlenkbereich außenliegenden Seite der Kette angeordnet sind und an dieser Seite von den Kettengliedern vorstehen, wobei die Dämpfungsmittel streifenförmig mit einer im Querschnitt pilzkopfartigen Oberseite ausgebildet sind und einen Fuß aufweisen, der in eine entsprechende Nut an der jeweiligen Stelle des Kettenglieds eingreift.

Die Dämpfungsmittel können so ausgeführt werden, dass sie über einen relativ langen zeitraum nicht ermüden und nicht abgenutzt werden, so dass keine Verschmutzungen zu befürchten sind. Sie können herstellerseitig sicher an den Kettengliedern angeordnet und zusammen mit der vorkonfektionierten Energieführungskette ausgeliefert werden.

Die erfindungsgemäße Konstruktion ist sowohl bei kurzen wie auch bei langen Verfahrwegen von Energieführungsketten vorteilhaft. Sie kann auch bei vertikalen Anwendungen von Energieführungsketten eingesetzt werden. Ist die Kette hängend in einer Blechrinne angeordnet, die horizontal verfahren wird, so schlägt sie aufgrund der auf sie wirkenden Trägheitskräfte gegen die Blechwände der Rinne an, was zu erheblichen Schlaggeräuschen führt. Zur Geräuschdämpfung sind vorzugsweise beide gegenüberliegenden schmalen Seitenflächen der Seitenlaschen oder Außenseiten der Traversen der Kettenglieder mit Dämpfungsmitteln versehen.

Zur besseren Befestigung der Dämpfungsmittel kann die Nut eine Hinterschneidung aufweisen, in die ein entsprechender Vorsprung am Fuß der Dämpfungsmittel einrastet.

Um die Hinterschneidung in einer spritzgegossenen Seitenlasche auszuformen, kann sie zur Einführung eines Stempels als quer zur Nut verlaufende und in eine Seitenfläche mündende Öffnung ausgebildet sein.

Die Dämpfungsmittel bestehen bevorzugt aus einem relativ weichen Kunststoffmaterial, zum Beispiel aus PUR. Das Dämpfungsmittel kann auch aus einem Schaumstoff oder Gummimaterial bestehen. Das Dämpfungsmaterial kann eine verglichen mit dem Material der Seitenteile größere Elastizität oder geringere Härte aufweisen.

Vorzugsweise sind die Dämpfungsmittel an den Seitenlaschen der Kettenglieder angeordnet. Insbesondere bei horizontal verfahrbaren Energieführungsketten können die Dämpfungsmittel an den schmalen , in Kettenlängsrichtung verlaufenden Seitenflächen der Seitenlaschen angebracht sein. Auch die Außenseiten der Traversen können mit den Dämpfungsmitteln versehen sein.

Ausführungsbeispiele der Erfindung werden im Folgenden anhand der Zeichnung näher beschrieben.

In der Zeichnung zeigen:
- Fig. 1: eine seitliche Ansicht eines Kettenglieds,
- Fig. 2: eine teilweise aufgeschnittene Vorderansicht des Kettenglieds gemäß Figur 1,
- Fig. 3: einen ausschnittsweise dargestellten Längsschnitt durch eine Seitenlasche und darin angeordneten Pilzkopfstopfen als Dämpfungsmittel,
- Fig. 4: einen Schnitt längs der Linie IV-IV in Figur 3,
- Fig. 5: zwei von links nach rechts aufeinander folgende Verfahrepositionen beim horizontalen Schubbetrieb einer Kette und
- Fig. 6: die Lage einer Kette bei vertikaler Anwendung in einer vertikalen Rinne, wenn diese horizontal von links nach rechts verfahren wird.

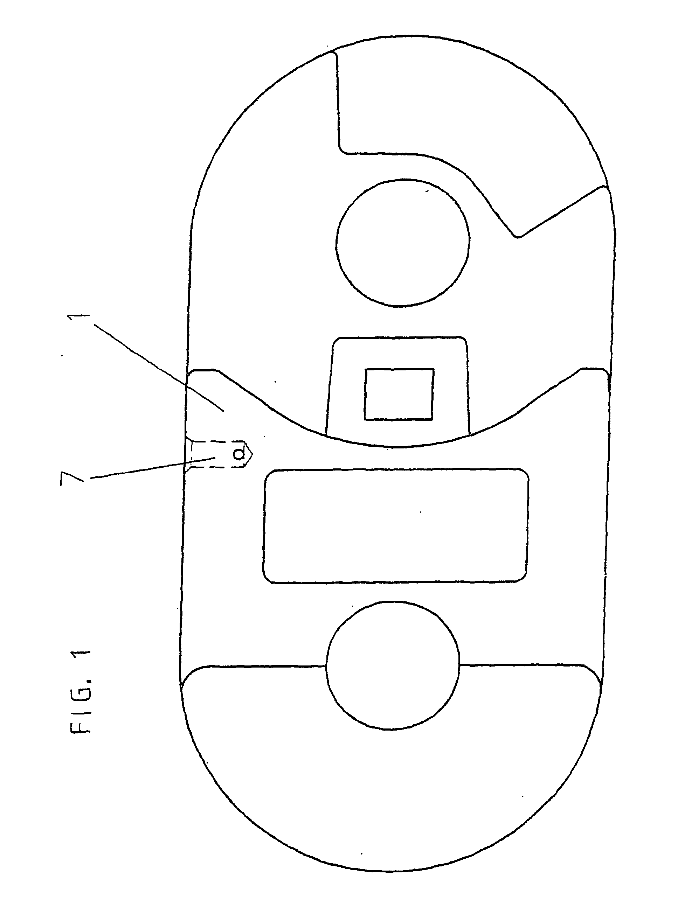

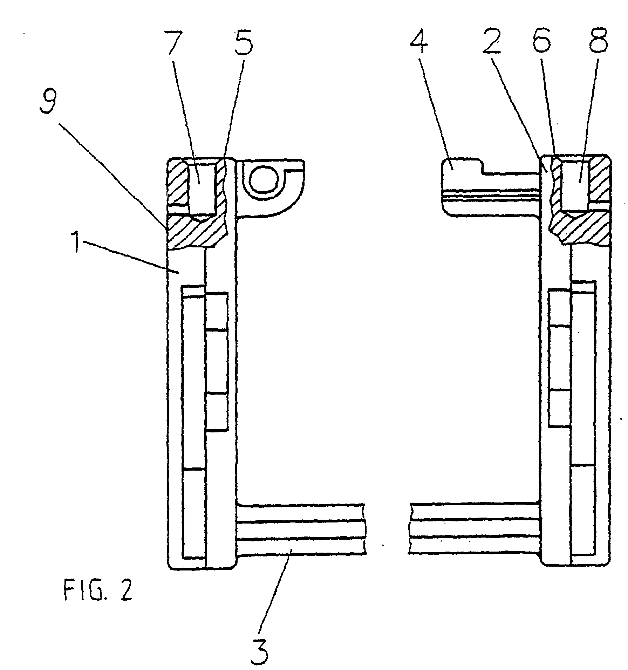

Wie aus den Figuren 1 und 2 hervorgeht, bestehen die Kettenglieder der Energieführungskette aus jeweils zwei Seitenlaschen 1 und 2 und diese miteinander verbindenden Traversen. In Figur 2 ist lediglich die untere Traverse 3 gezeigt. Die obere Traverse wird an der linken Seitenlasche 1 schwenkbar befestigt und mit dem nach innen weisenden Ansatz 4 der rechten Seitenlasche 2 rastend verbunden.

Zur Dämpfung der Geräusche sind Dämpfungsmittel an den oberen schmalen Seitenflächen 5 und 6 der Seitenlaschen 1 bzw. 2 vorgesehen. Die noch weiter zu beschreibenden Dämpfungsmittel weisen Füße auf, die in Nuten 7 und 8 an den oberen Seitenflächen 5 bzw. 6 eingreifen.

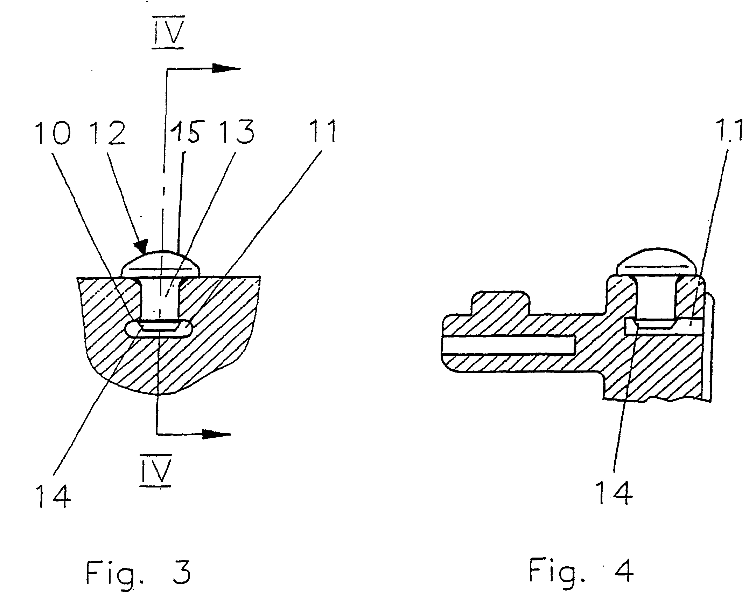

Die Figuren 3 und 4 zeigen in vergrößertem Maßstab eine spezielle Ausbildung der Nuten 7 und 8 sowie der darin eingesetzten Dämpfungsmittel.

Wie aus den Figuren 3 und 4 hervorgeht, sind die Nuten 7 und 8 zylinderförmig und senkrecht zu den oberen Seitenflächen 5 bzw. 6 in die Seitenlaschen 1 bzw. 2 eingeformt. An ihrem unteren Ende weisen sie Hinterschneidungen 10 auf, in die ein entsprechender Vorsprung am Fuß der Dämpfungsmittel einrastet. Die Hinterschneidung 10 ist als quer zur Nut verlaufende und in eine größere Seitenfläche 9 mündende quaderförmige Öffnung 11 ausgebildet. Die Öffnung 11 dient zum Einformen der Hinterschneidung der Nut 7 und 8 bei der Spritzgießherstellung der Seitenlaschen 1 und 2 mit Hilfe eines quaderförmigen Stempels.

In entsprechender Weise sind die Dämpfungsmittel als Pilzkopfstopfen 12 ausgebildet, mit einem zylinderförmigen Fuß 13, dessen Durchmesser etwa dem Durchmesser der Nuten 7 und 8 entspricht, einen am unteren Ende des Fußes 13 radial nach außen weisenden, ringförmigen Vorsprung 14, der sich zum unteren Ende des Pilzkopfstopfens 12 etwa auf den Durchmesser des Fußes 13 verjüngt, und einen den Rand der Nuten 7 und 8 übergreifenden Pilzkopf 15.

Die als Pilzkopfstopfen 12 ausgebildeten Dämpfungsmittel können wahlweise an den Seitenlaechen 1 und 2 der Kettenglieder einer Energieführungskette befestigt werden.

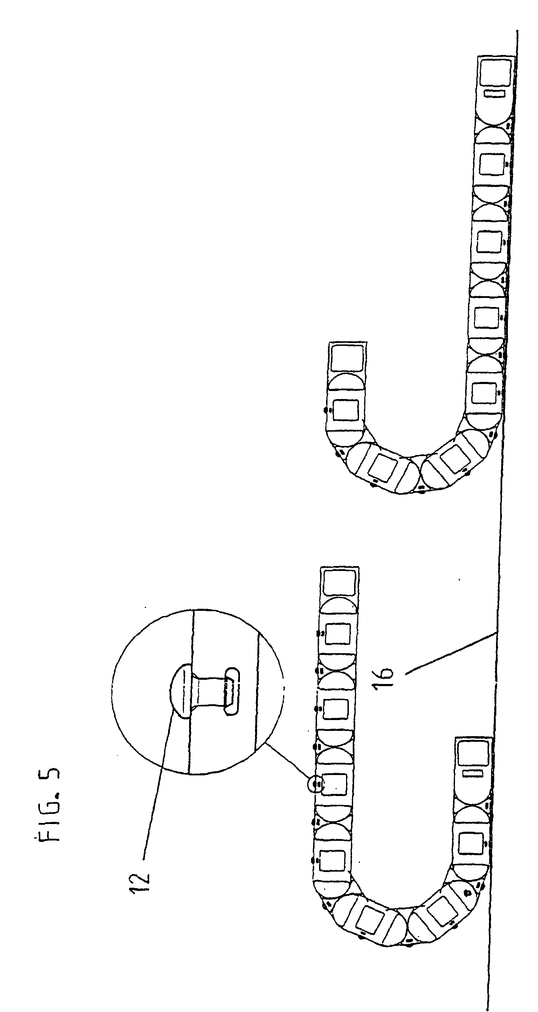

Fig. 5 zeigt die Anwendung der vorstehend beschriebenen Energieführungskette mit Dämpfungsmitteln, bei der die Kettenglieder auf einer horizontalen Ablagefläche 16 beim Schubbetrieb der Kette in die Strecklage abgelegt werden. Um die dabei auftretenden Schlaggeräusche zu dämpfen, sind Pilzkopfstopfen 12 an der Außenseite der Energieführungskette im Bereich der schmalen Seitenflächen der Seitenlaschen angeordnet.

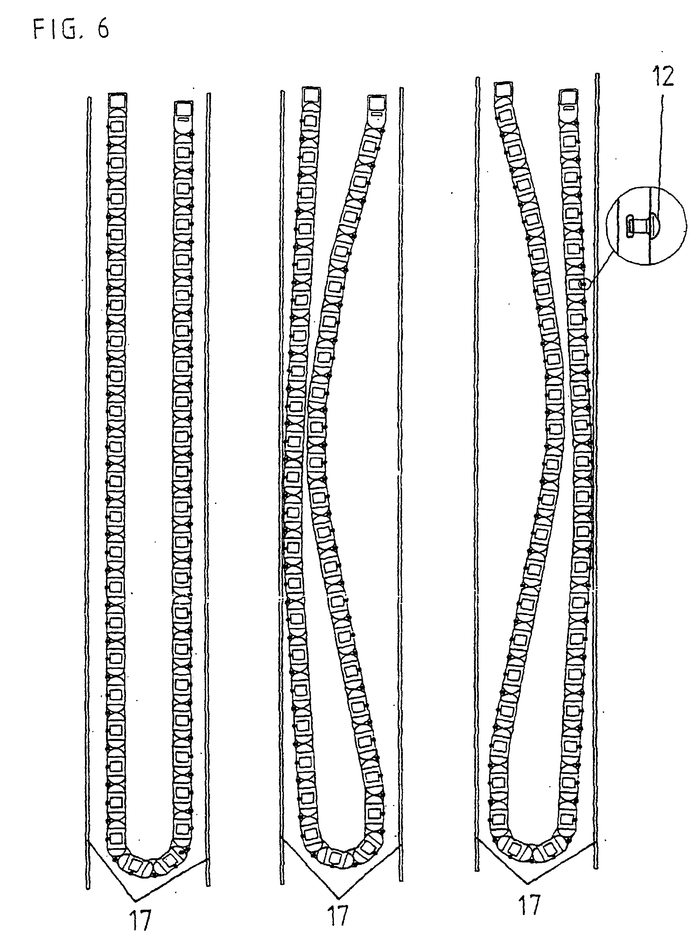

Eine andere wichtige Anwendung ist in Fig. 6 dargestellt. Hier ist die Energieführungskette vertikal hängend in einer Blechrinne 17 angeordnet, die ihrerseits horizontal verfahren wird. Durch die bei Beschleunigung während des Verfahrens auftretenden Trägheitskräfte schlägt die Kette an den Seitenwänden der Blechrinne 17 an, wie durch die mittlere und rechte Abbildung von Fig. 6 dargestellt ist. Zur Vermeidung der teilweise herheblichen Schlaggeräusche sind die in den Figuren 3 und 4 dargestellten Pilzkopfstopfen 12 ebenfalls an den schmalen Seitenflächen der Seitenlaschen der Kettenglieder angeordnet.

### Bezugszeichenliste

- 1: Seitenlasche
- 2: Seitenlasche
- 3: Traverse
- 4: Ansatz
- 5: Seitenfläche
- 6: Seitenfläche
- 7: Nut
- 8: Nut
- 9: Seitenfläche
- 10: Hinterschneidung
- 11: Öffnung
- 12: Pilzkopfstopfen
- 13: Fuß
- 14: Vorsprung
- 15: Pilzkopf
- 16: Ablagefläche
- 17: Blechrinne

## Patentansprüche

1. Energieführungskette zur Führung von Schläuchen, Kabeln oder dergleichen zwischen zwei relativ zueinander beweglichen Anschlussstellen mit mehreren gelenkig miteinander verbundenen Kettengliedern, die jeweils zwei Seitenlaschen (1, 2) und diese miteinander verbindende Traversen (3) aufweisen, wobei die Kette aus einem mit einer der Anschlussstellen verbindbaren Trum und einem mit der anderen Anschlussstelle verbindbaren Trum , die über einen Umlenkbereich ineinander übergehen, besteht, **dadurch gekennzeichnet, dass** zumindest in einem Kettenabschnitt die Kettenglieder Dämpfungsmittel aus weichem Material aufweisen, welche Dämpfungsmittel an der im Umlenkbereich außen liegenden Seite der Kette angeordnet sind und an dieser Seite von den Kettengliedern vorstehen, wobei die Dämpfungsmittel als Pilzkopfstopfen (12) ausgebildet sind, die einen Fuß (13) aufweisen, der in einer entsprechende Nut (7, 8) an der jeweiligen Stelle des Kettenglieds eingreift.

2. Energieführungskette zur Führung von Schläuchen, Kabeln oder dergleichen zwischen zwei relativ zueinander beweglichen Anschlussstellen mit mehreren gelenkig miteinander verbundenen Kettengliedern, die jeweils zwei Seitenlaschen (1, 2) und diese miteinander verbindende Traversen (3) aufweisen, wobei die Kette aus einem mit einer der Anschlussstellen verbundenen Trum und einem mit der anderen Anschlussstelle verbundenen Trum, die über einen Umlenkbereich ineinander übergehen, besteht, **dadurch gekennzeichnet, dass** zumindest in einem Kettenabschnitt die Kettenglieder Dämpfungsmittel aus weichem Material aufweisen, welche Dämpfungsmittel an der im Umlenkbereich außen liegenden Seite der Kette angeordnet sind und an dieser Seite von den Kettengliedern vorstehen, wobei die Dämpfungsmittel streifenförmig mit einer im Querschnitt pilzkopfartigen Oberseite ausgebildet sind und einen Fuß aufweisen, der in eine entsprechende Nut an der jeweiligen Stelle des Kettenglieds eingreift.

3. Energieführungskette nach Anspruch 1 oder 2, **dadurch gekennzeichnet, dass** die Nut (7, 8) eine Hinterschneidung (10) aufweist, in die ein entsprechender Vorsprung (14) am Fuß (13) der Dämpfungsmittel einrastet.

4. Energieführungskette nach Anspruch 3, **dadurch gekennzeichnet, dass** die Hinterschneidung (10) als quer zur Nut (7, 8) verlaufende und in eine Seitenfläche (9) mündende Öffnung (11) ausgebildet ist.

5. Energieführungskette nach einem der Ansprüche 1 bis 4, **dadurch gekennzeichnet, dass** die Dämpfungsmittel aus einem weichen Kunststoff bestehen.

6. Energieführungskette nach einem der Ansprüche 1 bis 5, **dadurch gekennzeichnet, dass** die Dämpfungsmittel an den Seitenlaschen (1,2) angeordnet sind.

7. Energieführungskette nach Anspruch 6, **dadurch gekennzeichnet, dass** die Dämpfungsmittel an den schmalen, in Kettenlängsrichtung verlaufenden Seitenflächen (5) und (6) der Seitenlaschen (1) bzw. (2) angeordnet sind.

8. Energieführungskette nach einem der Ansprüche 1 bis 5, **dadurch gekennzeichnet, dass** die Dämpfungsmittel an den Außenseiten der Traversen (3) angeordnet sind.

## Claims

1. Energy drag chain for guiding tubes, cables or the like between two points of connection that can be moved relative to each other, with a plurality of chain members hinged to one another that have two lateral flat links (1, 2) each and cross-members (3) interlinking said flat links, where the chain comprises a strand attachable to one of the points of connection and a strand attachable to the other point of connection, the two of which transition into one another via a deflection zone, **characterised in that** the chain members are provided, at least in one chain section, with damping devices made of a soft material, where the damping devices are provided on the outer side of the chain in the deflection zone and project from the chain members on this side, where the damping devices are designed as mushroom plugs (12), displaying a foot (13) that engages a corresponding groove (7, 8) at the respective point on the chain member.

2. Energy drag chain for guiding tubes, cables or the like between two points of connection that can be moved relative to each other, with a plurality of chain members hinged to one another that have two lateral flat links (1, 2) each and cross-members (3) interlinking said flat links, where the chain comprises a strand attached to one of the points of connection, and a strand attached to the other point of connection, the two of which transition into one another via a deflection zone, **characterised in that** the chain members are provided, at least in one chain section, with damping devices made of a soft material, where the damping devices are provided on the outer side of the chain in the deflection zone and project from the chain members on this side of the chain, where the damping devices are of strip-like design with a mushroom-shaped cross-section at the top and display a foot that engages a corresponding groove at the respective point on the chain member.

3. Energy drag chain according to Claim 1 or 2, **characterised in that** the groove (7, 8) has an undercut (10), into which snaps a corresponding projection (14) on the foot (13) of the damping devices.

4. Energy drag chain according to Claim 3, **characterised in that** the undercut (10) is designed as an opening (11) that runs transverse to the groove (7, 8) and opens on a lateral surface (9).

5. Energy drag chain according to one of Claims 1 to 4, **characterised in that** the damping devices consist of a soft plastic.

6. Energy drag chain according to one of Claims 1 to 5, **characterised in that** the damping devices are provided on the lateral flat links (1, 2).

7. Energy drag chain according to Claim 6, **characterised in that** the damping devices are provided on the narrow lateral surfaces (5, 6) of the lateral flat links (1, 2) running in the longitudinal direction of the chain.

8. Energy drag chain according to one of Claims 1 to 5, **characterised in that** the damping devices are provided on the outer surfaces of the cross-members (3).

## Revendications

1. Chaîne d'acheminement d'énergie en vue du guidage de tuyaux souples, câbles ou analogues entre deux points de raccordement mobiles l'un par rapport à l'autre, équipée de plusieurs maillons réunis de façon articulée, qui présentent respectivement deux attaches latérales (1, 2) et des traverses (3) réunissant celles-ci, la chaîne se composant d'un brin pouvant être réuni à l'un des points de raccordement et d'un brin pouvant être réuni à l'autre point de raccordement, qui se transforment l'un dans l'autre par l'intermédiaire d'une région de renvoi, **caractérisée en ce qu'**au moins dans un tronçon de chaîne les maillons présentent des moyens d'amortissement en matériau souple, lesquels moyens d'amortissement sont disposés sur le côté extérieur de la chaîne dans la région de renvoi et font saillie des maillons sur ce côté, les moyens d'amortissement étant réalisés sous la forme de bouchons en forme de tête de champignon (12), qui présentent un pied (13), qui pénètre dans une rainure correspondante (7, 8), à l'endroit respectif du maillon.

2. Chaîne d'acheminement d'énergie en vue du guidage de tuyaux souples, câbles ou analogues entre deux points de raccordement mobiles l'un par rapport à l'autre, équipée de plusieurs maillons réunis de façon articulée, qui présentent deux attaches latérales (1, 2) et des traverses (3) réunissant celles-ci, la chaîne se composant d'un brin relié à l'un des points de raccordement et d'un brin relié à l'autre point de raccordement, qui se transforment l'un dans l'autre par l'intermédiaire d'une région de renvoi, **caractérisée en ce qu'**au moins dans un tronçon de la chaîne, les maillons présentent des moyens d'amortissement en matériau souple, lesquels moyens d'amortissement sont disposés sur le côté extérieur de la chaîne dans la région de renvoi et font saillie des maillons sur ce côté, les moyens d'amortissement étant réalisés sous forme de bande avec un côté supérieur en forme de tête de champignon en coupe et présentent un pied, qui pénètre dans une rainure correspondante à l'endroit respectif du maillon.

3. Chaîne d'acheminement d'énergie selon la revendication 1 ou 2, **caractérisée en ce que** la rainure (7, 8) présente une contre-dépouille (10) dans laquelle pénètre une partie saillante correspondante (14) au pied (13) des moyens d'amortissement.

4. Chaîne d'acheminement d'énergie selon la revendication 3, **caractérisée en ce que** la contre-dépouille (10) est réalisée sous la forme d'une ouverture (11) s'étendant perpendiculairement à la rainure (7, 8) et débouchant dans une surface latérale (9).

5. Chaîne d'acheminement d'énergie selon une des revendications 1 à 4, **caractérisée en ce que** les moyens d'amortissement sont en une matière plastique souple.

6. Chaîne d'acheminement d'énergie selon une des revendications 1 à 5, **caractérisée en ce que** les moyens d'amortissement sont disposés sur les attaches latérale s(1, 2).

7. Chaîne d'acheminement d'énergie selon la revendication 6, **caractérisée en ce que** les moyens d'amortissement sont disposés sur les petites surfaces latérales (5) et (6) s'étendant dans la direction longitudinale de la chaîne des attaches latérales (1) respectivement (2).

8. Chaîne d'acheminement d'énergie selon une des revendications 1 à 5, **caractérisée en ce que** les moyens d'amortissement sont disposés sur les côtés extérieurs des traverses (3).
